# EUROPEAN PATENT APPLICATION

(11) **EP 4 790 077 A1**
(43) Date of publication of application: **12.08.2026**
(21) Application number: 23962579.1
(22) Date of filing: 26.12.2023
(51) Int. Cl.: C08G 18/66, C08G 18/00

(54) **AQUEOUS DISPERSION OF POLYURETHANE OR POLYURETHANE UREA, AND PREPARATION METHOD THEREFOR AND USE THEREOF**

(71) Applicant: Wanhua Chemical Group Co., Ltd., Yantai, Shandong 264006 (CN)
(72) Inventor: WANG, Cuicui, Yantai, Shandong 264006 (CN); JIN, Yunquan, Yantai, Shandong 264006 (CN); YIN, Xundi, Yantai, Shandong 264006 (CN); CAO, Yuyang, Yantai, Shandong 264006 (CN)
(74) Representative: Potter Clarkson
(86) International application number: PCT/CN2023/142102
(87) International publication number: WO 2025/137885

(57) **Abstract**

The present invention relates to the technical field of adhesives, and provides an aqueous dispersion of polyurethane or polyurethane urea, and a preparation method therefor and a use thereof. The aqueous dispersion provided by the present invention is used as an effective component of an adhesive, and can achieve better damp-heat resistance and hydrolysis resistance and simultaneously achieve good initial adhesion. The aqueous dispersion provided by the present invention is prepared by reacting a composition comprising the following components: a) at least one siloxane compound; b) at least one polyol; c) at least one polyisocyanate; d) at least one hydrophilic compound; e) at least one nonionic hydrophilic compound; and an optional component f): at least one compound containing 1 to 3 amino groups and containing no COOH group. Optionally, the raw materials for preparing the aqueous dispersion further comprise an optional component g): at least one compound containing a COOH group and 1 to 3 amino groups or hydroxyl groups at the same time. Moreover, the acid value of the aqueous dispersion is between 0.005 mgKOH/g and 5 mgKOH/g.

## Description

### TECHNICAL FIELD

The present invention pertains to the technical field of adhesives, specifically relating to an aqueous dispersion of polyurethane or polyurethane-urea, a preparation method therefor and use thereof.

### BACKGROUND

In the production process of shoes, adhesives are necessary to bond the outsole and midsole, the sole and upper, or the upper fabrics. Two-component brushing adhesives are currently the mainstream form. The two-component system includes a polyurethane adhesive and a curing agent. Before use, the two components are mixed evenly in a certain proportion. The polyurethane adhesive, as the main component of shoe adhesives, provides appropriate bonding strength for various shoe materials. The curing agent can connect two or more polyurethane molecules, playing a role in chemical crosslinking and improving the durability of the shoe adhesives.

US4870129 discloses an aqueous dispersion of polyurethane or polyurethane-urea, which introduces hydroxyl groups into the molecular chain and is used in combination with an isocyanate-based curing agent. The crosslinking density is increased by the reaction between isocyanate and hydroxyl groups, significantly improving the bonding strength and heat resistance. However, due to the addition of the curing agent, the open time of the finished adhesive is short. If too much adhesive is prepared, it will result in waste and increase production costs. At the same time, the curing agent contains a large amount of NCO groups, which are highly toxic and pose a threat to the environment and the health of downstream workers.

CN110016117 discloses a preparation method and application of a self-crosslinking polyurethane dispersion. This dispersion is formed by reacting triphenylmethanol with a polyurethane prepolymer and maintains chemical stability at room temperature for a long time. When the temperature rises to 70-80°C, the polyurethane begins to deblock, and the triphenylmethoxy groups largely detach from the main chain, releasing the polyurethane with NCO groups at the ends. The NCO then undergoes a chemical reaction with the active hydrogen-containing structures in the polyurethane chain to form a stable chemical crosslinking structure, thereby enhancing its adhesive effect. However, due to the deblocking temperature of the blocking agent triphenylmethanol being only 70-80°C, and the blocking-deblocking process inherently being a reversible reaction, this poses higher requirements on the storage environment of the emulsion and the production and transportation process of the shoe adhesive. Further, during use, the triphenylmethanol generated by deblocking has a boiling point as high as 380°C, which remains in the adhesive and poses potential toxicity and environmental pollution risks, limiting its widespread use.

Patents such as DE4410557 and DE19954500 propose introducing carboxylate salts into aqueous dispersions of polyurethane or polyurethane-urea, and then compounding them with carbodiimide. The reaction between carboxylic acid and carbodiimide is used to increase the crosslinking density and enhance the strength of the adhesive. Among them, the carboxylate salts are obtained by adding dimethylolpropionic acid to polyurethane or polyurethane-urea, and then neutralizing with tertiary amines. However, such dispersions contain a large number of carboxyl groups, which results in poor hydrolysis resistance. After adding the other component, carbodiimide, the generation of a large amount of crosslinked components usually leads to a decrease in tack, which instead makes the bond more prone to failure during bonding.

CN101381451 describes the preparation of self-crosslinkable waterborne polyurethane dispersions by adding sterically hindered siloxanes. Although the addition of sterically hindered siloxane structures can ensure stable storage of the self-crosslinking dispersions, it can also lead to a slow crosslinking reaction rate of the dispersion during use, making it difficult to achieve the desired properties. At the same time, the patent also points out that dispersions prepared using siloxane crosslinking monomers containing non-sterically hindered groups such as methoxy or ethoxy cannot be stored stably and thus lack self-crosslinking properties.

CN108250390 describes the preparation of self-crosslinking waterborne polyurethane dispersions by adding non-sterically hindered siloxanes. However, due to the influence of steric hindrance on trimethoxy or triethoxy groups, the silane groups cannot be fully hydrolyzed and crosslinked, or the degree of crosslinking of dimethoxy or diethoxy groups is insufficient, resulting in a certain gap in durability compared to two-component systems, limiting the use in high-end shoe types that require high durability.

CN109081897 describes a preparation method for a waterborne polyurethane with excellent damp-heat resistance. It involves introducing two types of silanes to graft onto the main chain and side chains of the polyurethane, respectively. The siloxanes undergo hydrolytic crosslinking with each other, thereby establishing damp-heat resistance. However, the waterborne polyurethane prepared by this method suffers from affected tack due to the generation of a large amount of crosslinking, making the bond prone to failure during bonding, leading to a higher rework rate and significantly reducing the efficiency of shoe production.

CN112079989 discloses a preparation method of a waterborne polyurethane, which involves introducing a compound containing COOH groups that can react with isocyanate, and then using it in combination with carbodiimide to enhance the initial adhesive strength of the adhesive. This method results in a high acid value content, and the use of carboxyl groups leads to a decrease in the hydrolysis resistance of the waterborne polyurethane dispersion, resulting in a short shelf life.

### SUMMARY OF THE INVENTION

The present invention provides an aqueous dispersion of polyurethane or polyurethane-urea, as well as a preparation method and use thereof. The aqueous dispersion provided by the present invention, as an effective component of an adhesive, can achieve superior damp-heat resistance and hydrolysis resistance without the use of a curing agent, while also maintaining good initial tack.

To achieve its objective, the present invention provides the following technical solutions:
The present invention provides an aqueous dispersion of polyurethane or polyurethane-urea, prepared by reacting a composition comprising the following components:
a) at least one siloxane compound, wherein the general formula of the siloxane compound is as follows: 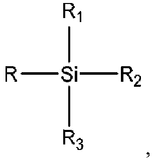 wherein the group R contains at least one NCO-reactive group, and at least two of the groups R₁, R₂, and R₃ are the same or different alkoxy groups, wherein the alkoxy groups are selected from methoxy or ethoxy;
b) at least one polyol with a functionality of 2-4;
c) at least one polyisocyanate;
d) at least one hydrophilic compound, wherein the hydrophilic group of the hydrophilic compound comprises one or more of ionic groups or potential ionic groups, and the hydrophilic compound contains 2 to 3 NCO-reactive groups;
e) at least one nonionic hydrophilic compound that is reactive with NCO and possesses a monofunctional degree;

optional component f): at least one compound containing 1 to 3 amino groups and containing no COOH groups;
optionally, raw materials for preparing the aqueous dispersion further comprise optional component g): at least one compound containing COOH groups and simultaneously containing 1 to 3 amino groups or hydroxyl groups;
based on the total mass of components a) to g), the amount of each component used is as follows: component a) 0.05-1.25wt%, component b) 75-92wt%, component c) 7-17wt%, component d) 0.5-2.5wt%, component e) 0.02-1.5wt%, component f) 0-2.5wt%, and component g) 0-3wt%; and
the acid value of the aqueous dispersion ranges from 0.005 mgKOH/g to 5 mgKOH/g, preferably from 0.01 mgKOH/g to 3 mgKOH/g, and more preferably from 0.02 mgKOH/g to 3 mgKOH/g.

In some preferred embodiments, during the preparation of the aqueous dispersion, the preparation of the isocyanate-terminated prepolymer is carried out in the presence of trace amounts of alkali metal ions. Based on the total mass of the isocyanate-terminated prepolymer as 100%, the content of alkali metal ions ranges from 0.1 ppm to 30 ppm, preferably from 0.1 ppm to 23 ppm. The alkali metal ions are selected from Na⁺ and/or K⁺.

The isocyanate-terminated prepolymer is obtained by reacting raw materials containing at least component b), component c), and component e).
In some embodiments, in component a), the NCO-reactive group in the group R is one or more selected from the group consisting of hydroxyl, primary amino, and secondary amino; preferably, the component a) has at least one primary amino or secondary amino; preferably, the group R is a saturated aliphatic alkyl chain having at least one primary amino and/or secondary amino, optionally bearing an alkoxy group.

Preferably, the component a) is one or more selected from the group consisting of bis(3-trimethoxysilylpropyl)amine, bis(3-triethoxysilylpropyl)amine, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-β-(aminoethyl)-γ-aminopropylmethyldiethoxysilane, 3-aminopropyltrimethoxysilane, and 3-aminopropyltriethoxysilane.

In some embodiments, in component b), the polyol has a number-average molecular weight of 500-10000, preferably 1000-5000, and more preferably 1000-4000.

Preferably, the polyol is one or more selected from the group consisting of diols, triols, and tetraols.

Further preferably, the polyol is one or more selected from the group consisting of polyadipic acid-based polyester polyols, polycaprolactone polyols, and polycarbonate polyols;
more preferably, the polyol is selected from the group consisting of polyadipic acid-based polyester diols with a number-average molecular weight of 1000-4000 and a functionality of 2.

In some embodiments, in component c), the polyisocyanate is one or more selected from the group consisting of tetramethylene diisocyanate, pentamethylene diisocyanate, hexamethylene diisocyanate, dodecamethylene diisocyanate, 1,4-diisocyanatocyclohexane, isophorone diisocyanate, 4,4'-diisocyanatodicyclohexylmethane, 4,4'-diisocyanato-2,2-dicyclohexylpropane, 1,4-diisocyanatobenzene, 2,4-diisocyanatotoluene, 2,6-diisocyanatotoluene, diphenylmethane-4,4'-diisocyanate, 2,2'-diisocyanatodiphenylmethane, 2,4'-diisocyanatodiphenylmethane, tetramethylxylylene diisocyanate, p-xylylene diisocyanate, p-isopropylidene diisocyanate, p-phenylene diisocyanate, and cyclohexanedimethylene diisocyanate; preferably hexamethylene diisocyanate and/or isophorone diisocyanate.

In some embodiments, in component d), the hydrophilic compound is one or more selected from the group consisting of N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, and their alkali metal salts, alkaline earth metal salts, and ammonium salts; preferably N-(2-aminoethyl)-2-aminoethanesulfonate salt.

In some embodiments, in component e), the nonionic hydrophilic compound has a number-average molecular weight of 200-8000, preferably 500-3000;
preferably, the number of ethylene oxide in the nonionic hydrophilic compound ranges from 4 to 200, more preferably from 12 to 75;
preferably, the nonionic hydrophilic compound is a monofunctional polyethoxy ether with a number-average molecular weight of 200-8000 and an ethylene oxide number of 4 to 200, more preferably polyethylene glycol monomethyl ether with a number-average molecular weight of 500-3000 and an ethylene oxide number of 12 to 75.

In some embodiments, in component f), the compound containing 1 to 3 amino groups and containing no COOH groups is one or more of aliphatic amine compounds and cycloaliphatic amine compounds, preferably, the amino groups contained therein are primary amino groups and/or secondary amino groups, and the compound containing 1 to 3 amino groups and containing no COOH groups optionally contains hydroxyl groups;
preferably, the component f) is selected from one or both of isophorone diamine and N-(2-hydroxyethyl)ethylenediamine.

In some embodiments, the raw materials for preparing the aqueous dispersion include the component g), and the component g) is preferably one or more selected from the group consisting of monohydroxy carboxylic acids, dihydroxy carboxylic acids, dihydroxy dicarboxylic acids, trihydroxy carboxylic acids, monoamino carboxylic acids, diamino carboxylic acids, and triamino carboxylic acids;
preferably, the component g) is one or more selected from the group consisting of dimethylolpropionic acid, dimethylolbutanoic acid, dimethylolacetic acid, dihydroxysuccinic acid, hydroxypivalic acid, hydroxyacetic acid, hydroxypropionic acid, lysine, lactic acid, 6-aminocaproic acid, alanine, N-(2-aminoethyl)-β-alanine, aminoundecanoic acid, 8-aminooctanoic acid, 5-aminopentanoic acid, 4-aminobutyric acid, aminobenzoic acid, 4-aminomethylcyclohexanecarboxylic acid, 2-aminohexanoic acid, 4-aminocyclohexanecarboxylic acid, 12-aminododecanoic acid, and 9-aminononanoic acid, more preferably one or more of dimethylolpropionic acid, lactic acid, and lysine.

The present invention further provides a method for preparing the aqueous dispersion of polyurethane or polyurethane-urea as described above. The method comprises the following steps:
S1: reacting the component b), component c), and component e) to form an isocyanate-terminated prepolymer;
S2: after dissolution, further reacting the prepolymer with the component d), component a), and optionally component f), and then dispersing with water;
in step S1 and/or step S2, a solvent is optionally used that can be partially or completely removed either during dispersion or through a distillation operation following dispersion;
the optional component g) is added at any stage of step S1 and/or step S2;
meanwhile, during the preparation of the aqueous dispersion, the acid value of the prepared aqueous dispersion is controlled to be between 0.005mgKOH/g and 5mgKOH/g, preferably between 0.01mgKOH/g and 3mgKOH/g, and more preferably between 0.02mgKOH/g and 3mgKOH/g.

In some embodiments, in step S1, the preparation of the isocyanate-terminated prepolymer is carried out in the presence of trace amounts of alkali metal ions, and based on the total mass of the isocyanate-terminated prepolymer as 100%, the content of the alkali metal ions is 0.1 ppm to 30 ppm, and the alkali metal ions are selected from Na⁺ and/or K⁺.

The present invention also provides use of the aqueous dispersion as described above or the aqueous dispersion prepared by the method as described above in the preparation of adhesives and sealants.

The technical solution provided by the present invention has the following beneficial effects:
In the aqueous dispersion of polyurethane or polyurethane-urea provided by the present invention, a non-sterically hindered siloxane functional monomer is introduced into the reaction system, and simultaneously the acid value of the dispersion is controlled to be between 0.005mgKOH/g and 5mgKOH/g. When used as the effective component of an adhesive, it can achieve superior damp-heat resistance and hydrolysis resistance without the use of a curing agent, while also providing good initial tack, extended shelf life, and superior storage stability, with performance comparable to that of a two-component system.

### DETAILED DESCRIPTION

To facilitate the understanding of the present invention, the present invention will be further described below with reference to examples. It should be understood that the following examples are merely for better understanding of the present invention and do not imply that the present invention is limited to the following examples.

Unless otherwise defined, all technical and scientific terms used herein have the same meaning as commonly understood by those skilled in the art to which the present invention pertains. The term "and/or" as may be used herein includes any and all combinations of one or more of the listed items.

The present invention provides an aqueous dispersion of polyurethane or polyurethane-urea, prepared by reacting a composition comprising the following components:
a) at least one siloxane compound, wherein the general formula of the siloxane compound is as follows: 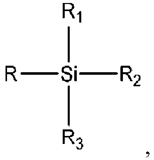 wherein the group R contains at least one NCO-reactive group, and at least two of the groups R₁, R₂, and R₃ are the same or different alkoxy groups, wherein the alkoxy groups are selected from methoxy or ethoxy;
b) at least one polyol with a functionality of 2-4;
c) at least one polyisocyanate;
d) at least one hydrophilic compound, the hydrophilic group of the hydrophilic compound contains one or more of ionic groups or potential ionic groups, and the hydrophilic compound contains 2 to 3 NCO-reactive groups;
e) at least one nonionic hydrophilic compound that is reactive with NCO and has a monofunctionality;

optional component f): at least one compound containing 1 to 3 amino groups and containing no COOH groups;
optionally, the raw materials for preparing the aqueous dispersion further comprise optional component g): at least one compound containing COOH groups and simultaneously containing 1 to 3 amino groups or hydroxyl groups;
based on the total mass of components a) to g), the amount of each component used is as follows: component a) 0.05-1.25wt%, component b) 75-92wt%, component c) 7-17wt%, component d) 0.5-2.5wt%, component e) 0.02-1.5wt%, component f) 0-2.5wt%, and component g) 0-3wt%;
and the acid value of the aqueous dispersion is between 0.005mgKOH/g and 5mgKOH/g.

The present invention provides an aqueous dispersion of self-crosslinkable polyurethane or polyurethane-urea, in which a non-sterically hindered siloxane functional monomer is introduced into the reaction system, and the acid value of the dispersion is controlled to be between 0.005mgKOH/g and 5mgKOH/g. The aqueous dispersion obtained from the reaction system of the present invention, satisfying the specific acid value requirements mentioned above, serves as an effective component of an adhesive. It can achieve superior damp-heat resistance and hydrolysis resistance without the use of a curing agent, while also maintaining good initial tack, extended shelf life, and superior storage stability. Its performance is comparable to that of a two-component system.

In traditional practices in this field, to avoid hydrolysis of aqueous dispersions of polyurethane or polyurethane-urea and to further prevent a decrease in durability, it is generally desired to control the acid value of the aqueous dispersion as low as possible. However, after long-term research, the inventors have unexpectedly found that by controlling the acid value of the polyurethane or polyurethane-urea dispersion within a certain range, and through the synergistic effect with the aforementioned component a), a siloxane compound, the hydrolysis resistance of the aqueous dispersion of polyurethane or polyurethane-urea does not decrease, but rather exhibit superior performance compared to aqueous dispersions having an acid value that is too low or no acid value at all. This is surprising.

The polyurethane or polyurethane-urea of the present invention contains non-sterically hindered siloxane groups on the side chain, and the acid value of the dispersion is controlled within a certain range (0.005mgKOH/g to 5mgKOH/g). During the activation drying and curing processes in application, as the water evaporates, the probability of collision of the silane coupling agent increases. The slightly acidic condition makes the silane coupling agent more prone to hydrolysis and condensation, generating crosslinking. Combined with the specific acid value, it can provide superior substrate adhesion, and without the loss of tack, it can exhibit superior damp-heat resistance and better storage stability. However, if the acid value of the dispersion is too low, the synergistic effect with the siloxane compound (component a) cannot be achieved, resulting in insufficient damp-heat resistance; whereas if the acid value of the dispersion is too high, the presence of excessive COOH in the system will lead to poor hydrolysis resistance of the dispersion. Preferably, the acid value of the aqueous dispersion is controlled to be between 0.01mgKOH/g and 3mgKOH/g, more preferably between 0.02mgKOH/g and 3mgKOH/g, which is conducive to better synergistic interaction with component a) and to achieving both good initial tack and damp-heat resistance.

In some embodiments, the acid value of the aqueous dispersion is, for example, 0.005mgKOH/g, 0.008mgKOH/g, 0.01mgKOH/g, 0.02mgKOH/g, 0.05mgKOH/g, 0.10mgKOH/g, 0.50mgKOH/g, 1.00mgKOH/g, 1.25mgKOH/g, 1.50mgKOH/g, 2.00mgKOH/g, 2.50mgKOH/g, 3.00mgKOH/g, etc.

In some embodiments, based on the total mass of components a) to g), the amount of component a) used is, for example, 0.05wt%, 0.07wt%, 0.10wt%, 0.50wt%, 0.70wt%, 1.00wt%, 1.25wt%, etc. In some embodiments, the amount of component b) used is, for example, 75wt%, 78wt%, 80wt%, 82wt%, 85wt%, 87wt%, 89wt%, 92wt%, etc. In some embodiments, the amount of component c) used is, for example, 7wt%, 10wt%, 12wt%, 15wt%, 17wt%, etc. In some embodiments, the amount of component d) used is, for example, 0.5wt%, 0.7wt%, 1.0wt%, 1.5wt%, 2.0wt%, 2.5wt%, etc. In some embodiments, the amount of component e) used is, for example, 0.02wt%, 0.10wt%, 0.50wt%, 1.0wt%, 1.5wt%, etc. In some embodiments, the amount of component f) used is, for example, 0wt%, 0.01wt%, 0.05wt%, 0.07wt%, 0.10wt%, 0.50wt%, 1.00wt%, 1.50wt%, 2.00wt%, 2.50wt%, etc. In some embodiments, the amount of component g) used is, for example, 0wt%, 0.005wt%, 0.01wt%, 0.02wt%, 0.05wt%, 0.07wt%, 0.10wt%, 0.50wt%, 1.00wt%, 1.50wt%, 2.00wt%, 2.50wt%, 3.00wt%, etc.

In preferred embodiments, during the preparation of the aqueous dispersion, the preparation of the isocyanate-terminated prepolymer is carried out in the presence of trace amounts of alkali metal ions, and based on the total mass of the isocyanate-terminated prepolymer as 100%, the content of the alkali metal ions ranges from 0.1 ppm to 30 ppm, for example, 0.1 ppm, 1 ppm, 5 ppm, 10 ppm, 15 ppm, 20 ppm, 23 ppm, 25 ppm, 30 ppm, etc., preferably 0.1 ppm to 23 ppm, and the alkali metal ions are selected from Na⁺ and/or K⁺; the isocyanate-terminated prepolymer is obtained by reacting raw materials comprising at least component b), component c), and component e). Among them, the manner for introducing the alkali metal ions is not particularly limited, as long as the reaction process for preparing the isocyanate-terminated prepolymer can be carried out in the presence of 0.1 ppm to 30 ppm of alkali metal ions. In some examples, the alkali metal ions may be derived from, but are not limited to, one or more of sodium hydroxide, potassium hydroxide, sodium alkoxide, and potassium alkoxide. Alternatively, the alkali metal ions can be introduced in other ways, such as by introducing the aforementioned amount of alkali metal ions together with the raw materials required for the reaction; in some embodiments, the alkali metal ions are introduced before or during the reaction.

In some embodiments, in component a), the NCO-reactive group in the group R is one or more selected from the group consisting of hydroxyl, primary amino, and secondary amino; preferably, the component a) has at least one primary amino or secondary amino; further preferably, in the component a), the group R is a saturated aliphatic alkyl chain having at least one primary amino and/or secondary amino, optionally bearing an alkoxy group; preferably, at least two of the groups R₁, R₂, and R₃ are alkoxy groups directly substituted with identical or different saturated aliphatic alkyl chains. Preferably, the component a) is one or more selected from the group consisting of bis(3-trimethoxysilylpropyl)amine, bis(3-triethoxysilylpropyl)amine, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-β-(aminoethyl)-γ-aminopropylmethyldiethoxysilane, 3-aminopropyltrimethoxysilane, and 3-aminopropyltriethoxysilane; more preferably, bis(3-methoxysilylpropyl)amine, 3-aminopropyltriethoxysilane, and/or N-β-(aminoethyl)-γ-aminopropyltriethoxysilane.

In some embodiments, in component b), the polyol has a number-average molecular weight of 500-10000, preferably 1000-5000, and more preferably 1000-4000; preferably, the polyol is one or more selected from the group consisting of diols, triols, and tetraols, such as one or more of diols, triols, and tetraols each with a number-average molecular weight of 1000-5000; further preferably, the polyol is one or more selected from the group consisting of polyadipic acid-based polyester polyols, polycaprolactone polyols, and polycarbonate polyols, such as one or more of polyadipic acid-based polyester polyols, polycaprolactone polyols, and polycarbonate polyols each with a number-average molecular weight of 1000-4000; more preferably, the polyol is selected from the group consisting of polyadipic acid-based polyester diols with a number-average molecular weight of 1000-4000 and a functionality of 2.

In some embodiments, in component c), the polyisocyanate is one or more selected from the group consisting of tetramethylene diisocyanate, pentamethylene diisocyanate, hexamethylene diisocyanate, dodecamethylene diisocyanate, 1,4-diisocyanatocyclohexane, isophorone diisocyanate, 4,4'-diisocyanatodicyclohexylmethane, 4,4'-diisocyanato-2,2-dicyclohexylpropane, 1,4-diisocyanatobenzene, 2,4-diisocyanatotoluene, 2,6-diisocyanatotoluene, diphenylmethane-4,4'-diisocyanate, 2,2'-diisocyanatodiphenylmethane, 2,4'-diisocyanatodiphenylmethane, tetramethylxylylene diisocyanate, p-xylylene diisocyanate, p-isopropylidene diisocyanate, p-phenylene diisocyanate, and cyclohexanedimethylene diisocyanate; preferably hexamethylene diisocyanate and/or isophorone diisocyanate.

In some embodiments, in component d), the hydrophilic compound is selected from, but not limited to, one or more of N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, and their alkali metal salts, alkaline earth metal salts, and ammonium salts; preferably N-(2-aminoethyl)-2-aminoethanesulfonate salt.

In some embodiments, in component e), the nonionic hydrophilic compound has a number-average molecular weight of 200-8000, preferably 500-3000; preferably, the number of ethylene oxide in the nonionic hydrophilic compound ranges from 4 to 200, more preferably from 12 to 75; preferably, the nonionic hydrophilic compound is a monofunctional polyethoxy ether with a number-average molecular weight of 200-8000 and an ethylene oxide number of 4 to 200, more preferably polyethylene glycol monomethyl ether with a number-average molecular weight of 500-3000 and an ethylene oxide number of 12 to 75.

In some embodiments, in component f), the compound containing 1 to 3 amino groups and containing no COOH group is one or more of aliphatic amine compounds and cycloaliphatic amine compounds; preferably, the amino groups contained therein are primary amino groups and/or secondary amino groups, and the compound containing 1 to 3 amino groups and no COOH group optionally contains hydroxyl groups; preferably, the component f) is selected from one or both of isophorone diamine and N-(2-hydroxyethyl)ethylenediamine.

The acid value of the aqueous dispersion can be achieved by adding free COOH-containing substances and/or introducing COOH-group-containing isocyanate-reactive compounds during the preparation process of the aqueous dispersion. Alternatively, other methods can be used to bring the aqueous dispersion to the target acid value. However, the key is to control the acid value of the final obtained aqueous dispersion to be within the range of 0.005mgKOH/g to 5mgKOH/g, preferably 0.01mgKOH/g to 3mgKOH/g, and more preferably 0.02mgKOH/g to 3mgKOH/g as required in the present invention. By controlling the acid value as described above, a synergistic effect with component a) in the formulation system of the present invention can be achieved, enabling the aqueous dispersion to exhibit good initial tack, damp-heat resistance, and hydrolysis resistance without the use of a curing agent. The free COOH-containing substances and COOH-group-containing isocyanate-reactive compounds (i.e., component g)) are preferably one or more selected from the group consisting of monohydroxy carboxylic acids, dihydroxy carboxylic acids, dihydroxy dicarboxylic acids, trihydroxy carboxylic acids, monoamino carboxylic acids, diamino carboxylic acids, and triamino carboxylic acids. Preferably, the component g) is one or more selected from the group consisting of dimethylolpropionic acid, dimethylolbutanoic acid, dimethylolacetic acid, dihydroxysuccinic acid, hydroxypivalic acid, hydroxyacetic acid, hydroxypropionic acid, lysine, lactic acid, 6-aminocaproic acid, alanine, N-(2-aminoethyl)-β-alanine, aminoundecanoic acid, 8-aminooctanoic acid, 5-aminopentanoic acid, 4-aminobutyric acid, aminobenzoic acid, 4-aminomethylcyclohexanecarboxylic acid, 2-aminohexanoic acid, 4-aminocyclohexanecarboxylic acid, 12-aminododecanoic acid, and 9-aminononanoic acid, more preferably one or more of dimethylolpropionic acid, lactic acid, and lysine. The above scheme is a preferred embodiment, and those skilled in the art may also choose other methods to achieve it.

In some embodiments, the solid content of the aqueous dispersion of polyurethane or polyurethane-urea provided by the present invention is 30-70 wt%, preferably 45-55 wt%, with the remaining portion being water. In some preferred embodiments, the aqueous dispersion of polyurethane or polyurethane-urea provided by the present invention has an average particle size of 100-300 nm, preferably 160-230 nm; preferably, the pH value of the aqueous dispersion of polyurethane or polyurethane-urea is 4-11, more preferably 7-9.

The present invention also provides a method for preparing the aforementioned aqueous dispersion of polyurethane or polyurethane-urea, which comprises:
S1: reacting the component b), component c), and component e) to form an isocyanate-terminated prepolymer;
S2: after dissolution, further reacting the prepolymer with component d), component a), and optionally component f), and then dispersing with water;
in step S1 and/or step S2, a solvent is optionally used that can be partially or completely removed either during dispersion or through a distillation operation following dispersion;
the optional component g) is added at any stage of step S1 and/or step S2;
meanwhile, during the preparation of the aqueous dispersion, the acid value of the prepared aqueous dispersion is controlled to be between 0.005mgKOH/g and 5mgKOH/g, preferably between 0.01mgKOH/g and 3mgKOH/g, more preferably between 0.02mgKOH/g and 3mgKOH/g.

In the preparation process of the present invention, a specific component a) is introduced into the reaction system, while the acid value of the dispersion is controlled within a range of 0.005mgKOH/g to 5mgKOH/g. The aqueous dispersion obtained by this process, when used as an effective component of an adhesive, can achieve better damp-heat resistance and hydrolysis resistance without the use of a curing agent, while also providing good initial tack.

Each of the above step S1 and step S2 may independently include one or more stages of reaction, and may independently include one or more sub-steps. For example, in step S1, component b), component c), component e), and the like are reacted in one step or in multiple steps to form the isocyanate-terminated prepolymer. For example, in step S2, the prepolymer is further reacted with component d), component a), and optionally component f), etc., in a one-stage or two-stage reaction.

Regarding aspects of the preparation method of aqueous dispersions of polyurethane or polyurethane-urea that are not specifically described, conventional operations and/or processes in the field may be followed.

In some preferred embodiments, as an example, the method may specifically proceed as follows:
S1: First, mix components b), c), e), and optionally a solvent, and react at 75-85°C until the theoretical NCO content is approximately reached (e.g., reaching a theoretical NCO content of 0.8-2.1%), to obtain an isocyanate-terminated prepolymer; preferably, the reaction is carried out in the presence of trace amounts of alkali metal ions (Na⁺ and/or K⁺); for example, based on the total mass of the isocyanate-terminated prepolymer as 100%, the content of the alkali metal ions ranges from 0.1 ppm to 30 ppm. S2: Cool the isocyanate-terminated prepolymer and dissolve it with solvent, and add components d), optional component f), and component a) at 40-50°C and react for a reaction time of, for example, 15-25 minutes. Add water for dispersion, and during or after dispersion, remove all or part of the used solvent by distillation. In steps S1 and S2, each component can be added in one stage or in multiple stages. Each component can be added to the reaction system after being dispersed in solvent or water in advance, or directly added to the reaction system. When component g) is used, it can be added at any stage of steps S1 and/or S2. In some embodiments, the amount of solvent used is, for example, 1-2.5 times the total mass of the solid content, and the amount of water used is, for example, 0.7-1.5 times the total mass of the solid content.

During the preparation of the aqueous dispersion, the solvent used, which is capable of being partially or completely removed by distillation during or after dispersion is, for example, one or more selected from the group consisting of acetone, methyl isobutyl ketone, butanone, tetrahydrofuran, dioxane, acetonitrile, dipropylene glycol dimethyl ether, and 1-methyl-2-pyrrolidone, more preferably acetone and/or butanone, and further preferably acetone.

The polyurethane or polyurethane-urea provided by the present invention has non-sterically hindered siloxane side-chain segments and a certain acid value content. The aqueous dispersion provided by the present invention can be stored stably and exhibits excellent hydrolysis resistance. During the activation drying and curing processes, as the water evaporates, the probability of collision between silane coupling agents increases. The slightly acidic conditions make the silane coupling agents more prone to hydrolysis and condensation, generating crosslinking. Through the combined action of silane coupling agents and specific acid values, it can simultaneously provide good substrate adhesion, while also offering superior damp-heat resistance and improving storage stability.

In a preferred embodiment, in step S1, the preparation of the isocyanate-terminated prepolymer is carried out in the presence of trace amounts of alkali metal ions. Based on the total mass of the isocyanate-terminated prepolymer as 100%, the content of the alkali metal ions ranges from 0.1 ppm to 30 ppm, and the alkali metal ions are selected from Na⁺ and/or K⁺. Preparing the isocyanate-terminated prepolymer in the presence of preferred trace amounts of alkali metal ions is beneficial for improving the application performance of the final aqueous dispersion and further enhancing its damp-heat resistance.

The present invention also provides use of the aforementioned aqueous dispersion or the aqueous dispersion prepared by the aforementioned method in the preparation of adhesives and sealants. The aqueous dispersion provided by the present invention and the adhesives and sealants obtained based on this aqueous dispersion can be applied to the bonding of materials such as rubber, plastic, leather, textiles, wood, and ABS (acrylonitrile-butadiene-styrene). This aqueous dispersion can be used alone or can also be mixed with auxiliary substances and/or additives known in the technical field of adhesives, such as emulsifiers, antioxidants, thickeners, leveling agents, defoaming agents, and the like.

Compared to the prior art, the aqueous dispersion of polyurethane or polyurethane-urea provided by the present invention has at least the following beneficial effects:
1. The aqueous dispersion provided by the present invention can be used as a single-component adhesive, without the use of additional curing agents such as isocyanates or carbodiimides. It is simple to operate, has no open time requirements, and greatly increases construction efficiency;
2. In the aqueous dispersion of the present invention, the amount of siloxane added is small, the acid value is properly controlled, and the aqueous dispersion itself has good stability. The compounding system based thereon exhibits better stability and a long storage life. It is suitable for preparing high-quality sealants, especially adhesives.

The technical solution of the present invention is further described exemplarily below with reference to the examples.

Where specific experimental steps or conditions are not specified in the examples, the corresponding conventional experimental steps or conditions in this technical field can be followed.

The main raw materials used in the following examples are described as follows. Unless otherwise specified, they are all commercially available common raw materials:
Sodium methoxide: Leling Chuangli Technology Co., Ltd.;

### Component a):

Silane coupling agent I:
   N-(β-aminoethyl)-γ-aminopropyltriethoxysilane, Mn=264g/mol (KH791, Nanjing Siwin New Material Co., Ltd.);
Silane coupling agent II:
   Bis(3-trimethoxysilylpropyl)amine, Mn=342g/mol (SCA-A67W, Nanjing Capatue New Material Technology Co., Ltd.);
Silane coupling agent III:
   3-aminopropyltriethoxysilane, Mn=221g/mol (KH550, Nanjing Quanxi Chemical Co., Ltd.);

### Component b):

Polyester polyol I: a polyester diol prepared from adipic acid and 1,4-butanediol, Mn=2000g/mol (Wanthanol^{®}WHP-204, Wanhua Chemical);
Polyester polyol II: a polyester diol prepared from adipic acid and 1,4-butanediol, Mn=3000g/mol (Wanthanol^{®}WHP-304, Wanhua Chemical);
Polycaprolactone polyol III: Polycaprolactone diol, Mn=2000g/mol (PCL-220N, Daicel);
Polycarbonate polyol IV: Polycarbonate diol, Mn=2000g/mol (T5652, Asahi Kasei);

### Component c):

Polyisocyanate I: Hexamethylene diisocyanate (Wannate^{®}HDI, Wanhua Chemical);
Polyisocyanate II: Isophorone diisocyanate (Wannate^{®}IPDI, Wanhua Chemical);

### Component d):

N-(2-aminoethyl)-2-aminoethanesulfonate salt (VESTAMIN^{®}A95, EVONIK, USA);

### Component e):

Polyethylene glycol monomethyl ether, Mn=1200g/mol (MPEG1200, LG Chemical);

### Component f):

Isophorone diamine (IPDA, Wanhua Chemical);
N-(2-hydroxyethyl)ethylenediamine (AEEA, Yangzi Petrochemical BASF);

### Component g):

Dimethylolpropionic acid (DMPA, Perstorp);
Lysine: (LA, Yancheng Green Chemical Co., Ltd.);
Lactic acid: Shanghai Aladdin Biochemical Technology Co., Ltd.

### Example 1

350g of polyester polyol I (component b)), 40g of isocyanate I (component c)), 2g of isocyanate II (component c)), 1.5g of DMPA (component g)), 2.44g of MPEG1200 (component e)), 0.02g of sodium methoxide (the amount of sodium ions was 22 ppm of the resulting isocyanate-terminated prepolymer), and 59g of acetone were added to a four-necked flask equipped with a reflux condenser, a thermometer, and a mechanical stirrer. The reaction was carried out at 80°C, and samples were taken every 1 hour to measure NCO%. After 3 hours, when the NCO% reached the theoretical content of 1.1%, the reaction was stopped to obtain an isocyanate-terminated prepolymer. The temperature was lowered to around 50°C, then 614g of acetone was added with stirring, and the mixture was mixed for 5 minutes to allow dissolution. Then, a mixed solution of 1g of AEEA (component f)), 8.4g of VESTAMIN^{®}A95 (component d)), and 37g of deionized water was added, and the reaction was carried out at 45°C for 10 minutes. Subsequently, a mixed solution of 1.5g of silane coupling agent I (component a)) and 6g of acetone was added, and the reaction was continued for another 10 minutes. The resulting mixture was poured into a dispersion cup, 455g of water was added under high-speed shear conditions at 1500 rpm, and then the acetone was removed by distillation under reduced pressure to obtain an aqueous dispersion of polyurethane-urea. This dispersion had a solid content of 49 wt%, an average particle size of 188 nm as determined by laser correlation method in the dispersed phase, a pH value of 7.3, and an acid value of 0.47mgKOH/g.

### Example 2

350g of polyester polyol I (component b)), 35g of polyester polyol II (component b)), 40g of isocyanate I (component c)), 4g of isocyanate II (component c)), 4.5g of MPEG1200 (component e)), 0.01g of sodium methoxide (the amount of sodium ions was 10 ppm of the resulting isocyanate-terminated prepolymer), and 65g of acetone were added to a four-necked flask equipped with a reflux condenser, a thermometer, and a mechanical stirrer. The reaction was carried out at 80°C, and samples were taken every 1 hour to measure NCO%. After 3 hours, when the NCO% reached the theoretical content of 1.14%, the reaction was stopped to obtain an isocyanate-terminated prepolymer. The temperature was lowered to around 50°C, then 672g of acetone was added with stirring, and the mixture was mixed for 5 minutes to allow dissolution. Then, a mixed solution of 2g of AEEA (component f)), 0.6g of lysine (component g)), 7.2g of VESTAMIN^{®}A95 (component d)), and 39g of deionized water was added, and the reaction was carried out at 45°C for 10 minutes. Subsequently, a mixed solution of 0.9g of silane coupling agent II (component a)) and 4g of acetone was added, and the reaction was continued for another 10 minutes. The resulting mixture was poured into a dispersion cup, 499g of water was added under high-speed shear conditions at 1500 rpm, and then the acetone was removed by distillation under reduced pressure to obtain an aqueous dispersion of polyurethane-urea. This dispersion had a solid content of 49 wt%, an average particle size of 182 nm as determined by laser correlation method in the dispersed phase, a pH value of 7.1, and an acid value of 0.22mgKOH/g.

### Example 3 (compared to Example 2)

350g of polyester polyol I (component b)), 35g of polyester polyol II (component b)), 40g of isocyanate I (component c)), 4g of isocyanate II (component c)), 4.5g of MPEG1200 (component e)), and 65g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.14%, the reaction was stopped to obtain an isocyanate-terminated prepolymer. The temperature was lowered to around 50°C, then 672g of acetone was added with stirring, and the mixture was mixed for 5 minutes to allow dissolution. Then, a mixed solution of 2g of AEEA (component f)), 0.6g of lysine (component g)), 7.2g of VESTAMIN^{®}A95 (component d)), and 39g of deionized water was added, and the reaction was carried out at 45°C for 10 minutes. Subsequently, a mixed solution of 0.9g of silane coupling agent II (component a)) and 4g of acetone was added, and the reaction was continued for another 10 minutes. The resulting mixture was poured into a dispersion cup, 499g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 178nm as determined by laser correlation method in the dispersed phase, a pH value of 7.0, and an acid value of 0.2mgKOH/g.

### Example 4

205g of polyester polyol I (component b)), 205g of polyester polyol II (component b)), 30g of isocyanate I (component c)), 10g of isocyanate II (component c)), 0.2g of MPEG1200 (component e)), and 90g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 0.82%, the reaction was stopped to obtain an isocyanate-terminated prepolymer. The temperature was lowered to around 50°C, then 765g of acetone was added with stirring, and the mixture was mixed for 5 minutes to allow dissolution. Then, a mixed solution of 2g of lysine (component g)), 7.2g of VESTAMIN^{®}A95 (component d)), and 37g of deionized water was added, and the reaction was carried out at 45°C for 10 minutes. Subsequently, a mixed solution of 0.3g of silane coupling agent III (component a)) and 3g of acetone was added, and the reaction was continued for another 10 minutes. The resulting mixture was poured into a dispersion cup, 521g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 196nm as determined by laser correlation method in the dispersed phase, a pH value of 7.3, and an acid value of 1.4mgKOH/g.

### Example 5

250g of polyester polyol I (component b)), 100g of polycaprolactone polyol III (component b)), 50g of isocyanate I (component c)), 6g of MPEG1200 (component e)), 6g of DMPA (component g)), and 41g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.4%, the reaction was stopped to obtain an isocyanate-terminated prepolymer. The temperature was lowered to around 50°C, then 618g of acetone was added with stirring, and the mixture was mixed for 5 minutes to allow dissolution. Then, a mixed solution of 4g of IPDA (component f)), 4.5g of VESTAMIN^{®}A95 (component d)), and 34g of deionized water was added, and the reaction was carried out at 45°C for 10 minutes. Subsequently, a mixed solution of 3g of silane coupling agent I (component a)) and 30g of acetone was added, and the reaction was continued for another 10 minutes. The resulting mixture was poured into a dispersion cup, 481g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 177nm as determined by laser correlation method in the dispersed phase, a pH value of 7.0, and an acid value of 2.7mgKOH/g.

### Example 6

390g of polyester polyol II (component b)), 34g of isocyanate I (component c)), 3g of isocyanate II (component c)), 1g of MPEG1200 (component e)), 0.5g of DMPA (component g)) and 43g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.46%, the reaction was stopped to obtain an isocyanate-terminated prepolymer. The temperature was lowered to around 50°C, then 728g of acetone was added with stirring, and the mixture was mixed for 5 minutes to allow dissolution. Then, a mixed solution of 5g of IPDA (component f)), 10g of VESTAMIN^{®}A95 (component d)), and 60g of deionized water was added, and the reaction was carried out at 45°C for 10 minutes. Subsequently, a mixed solution of 2g of silane coupling agent I (component a)) and 20g of acetone was added, and the reaction was continued for another 10 minutes. The resulting mixture was poured into a dispersion cup, 478g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 192nm as determined by laser correlation method in the dispersed phase, a pH value of 7.3, and an acid value of 0.008mgKOH/g.

### Example 7

370g of polyester polyol I (component b)), 50g of isocyanate I (component c)), 20g of isocyanate II (component c)), 7g of MPEG1200 (component e)), 10g of DMPA (component g)) and 46g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 2.09%, the reaction was stopped to obtain an isocyanate-terminated prepolymer. The temperature was lowered to around 50°C, then 777g of acetone was added with stirring, and the mixture was mixed for 5 minutes to allow dissolution. Then, a mixed solution of 10g of IPDA (component f)), 4.5g of VESTAMIN^{®}A95 (component d)), and 58g of deionized water was added, and the reaction was carried out at 45°C for 10 minutes. Subsequently, a mixed solution of 5g of silane coupling agent I (component a)) and 20g of acetone was added, and the reaction was continued for another 10 minutes. The resulting mixture was poured into a dispersion cup, 522g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 185nm as determined by laser correlation method in the dispersed phase, a pH value of 6.9, and an acid value of 4.5mgKOH/g.

### Example 8

200g of polyester polyol I (component b)), 150g of polycarbonate polyol IV (component b)), 40g of isocyanate I (component c)), 2g of isocyanate II (component c)), 2.44g of MPEG1200 (component e)) and 59g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.32%, the reaction was stopped to obtain an isocyanate-terminated prepolymer. The temperature was lowered to around 50°C, then 611g of acetone was added with stirring, and the mixture was mixed for 5 minutes to allow dissolution. Then, a mixed solution of 1g of AEEA (component f)), 8.4g of VESTAMIN^{®}A95 (component d)), and 37g of deionized water was added, and the reaction was carried out at 45°C for 10 minutes. Subsequently, a mixed solution of 1.5g of silane coupling agent I (component a)) and 6g of acetone was added, and the reaction was continued for another 10 minutes. The resulting mixture was poured into a dispersion cup, 455g of water was added under high-speed shear conditions at 1500rpm, acetone was then removed by distillation under reduced pressure, and a mixed solution of 1.5 g of lactic acid (component g)) and 10 g of water was added to obtain an aqueous dispersion of polyurethane-urea. This dispersion had a solid content of 49wt%, an average particle size of 188nm as determined by laser correlation method in the dispersed phase, a pH value of 7.3, and an acid value of 0.66mgKOH/g.

### Comparative Example 1 (compared to Example 3)

350g of polyester polyol I (component b)), 35g of polyester polyol II (component b)), 40g of isocyanate I (component c)), 4g of isocyanate II (component c)), 4.5g of MPEG1200 (component e)), and 65g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.14%, the reaction was stopped to obtain an isocyanate-terminated prepolymer. The temperature was lowered to around 50°C, then 672g of acetone was added with stirring, and the mixture was mixed for 5 minutes to allow dissolution. Then, a mixed solution of 2g of AEEA (component f)), 0.2g of lysine (component g)), 7.2g of VESTAMIN^{®}A95 (component d)) and 39g of deionized water was added, and the reaction was carried out at 45°C for 10 minutes. Subsequently, a mixed solution of 0.9g of silane coupling agent II (component a)) and 4g of acetone was added, and the reaction was continued for another 10 minutes. The resulting mixture was poured into a dispersion cup, 499g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 185nm as determined by laser correlation method in the dispersed phase, a pH value of 7.2, and an acid value of 0.004mgKOH/g.

### Comparative Example 2 (compared to Example 7)

370g of polyester polyol I (component b)), 50g of isocyanate I (component c)), 20g of isocyanate II (component c)), 7g of MPEG1200 (component e)), 13g of DMPA (component g)) and 46g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.71%, the reaction was stopped to obtain an isocyanate-terminated prepolymer. The temperature was lowered to around 50°C, then 777g of acetone was added with stirring, and the mixture was mixed for 5 minutes to allow dissolution. Then, a mixed solution of 6g of IPDA (component f)), 4.5g of VESTAMIN^{®}A95 (component d)), and 58g of deionized water was added, and the reaction was carried out at 45°C for 10 minutes. Subsequently, a mixed solution of 5g of silane coupling agent I (component a)) and 20g of acetone was added, and the reaction was continued for another 10 minutes. The resulting mixture was poured into a dispersion cup, 522g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 177nm as determined by laser correlation method in the dispersed phase, a pH value of 7.0, and an acid value of 5.5mgKOH/g.

### Comparative Example 3 (compared to Example 3, no silane coupling agent was added)

350g of polyester polyol I, 35g of polyester polyol II, 40g of isocyanate I, 4g of isocyanate II, 4.5g of MPEG1200, and 65g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.14%, the reaction was stopped to obtain an isocyanate-terminated prepolymer. The temperature was lowered to around 50°C, then 672g of acetone was added with stirring, and the mixture was mixed for 5 minutes to allow dissolution. Then, a mixed solution of 2g of AEEA, 0.6g of lysine, 7.2g of VESTAMIN^{®}A95 and 39g of deionized water was added, and the reaction was carried out at 45°C for 20 minutes. The resulting mixture was poured into a dispersion cup, 498g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 191nm as determined by laser correlation method in the dispersed phase, a pH value of 7.2, and an acid value of 0.22mgKOH/g.

### Comparative Example 4 (compared to Example 3, a smaller amount of the silane coupling agent was used)

350g of polyester polyol I, 35g of polyester polyol II, 40g of isocyanate I, 4g of isocyanate II, 4.5g of MPEG1200, and 65g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.14%, the reaction was stopped to obtain an isocyanate-terminated prepolymer. The temperature was lowered to around 50°C, then 672g of acetone was added with stirring, and the mixture was mixed for 5 minutes to allow dissolution. Then, a mixed solution of 2g of AEEA, 0.6g of lysine, 7.2g of VESTAMIN^{®}A95, and 39g of deionized water was added, and the reaction was carried out at 45°C for 10 minutes. Subsequently, a mixed solution of 0.1g of silane coupling agent II and 2g of acetone was added, and the reaction was continued for another 10 minutes. The resulting mixture was poured into a dispersion cup, 498g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 201nm as determined by laser correlation method in the dispersed phase, a pH value of 7.3, and an acid value of 0.2mgKOH/g.

### Comparative Example 5 (compared to Example 6, an excessively high amount of the silane coupling agent was used)

390g of polyester polyol II (component b)), 34g of isocyanate I (component c)), 3g of isocyanate II (component c)), 1g of MPEG1200 (component e)), 0.5g of DMPA (component g)) and 43g of acetone were added to a four-neck flask equipped with a reflux condenser, thermometer, and mechanical stirrer. The reaction was carried out at 80°C, and samples were taken every 1 hour to measure NCO%. After 3 hours, when the NCO% reached the theoretical content of 1.46%, the reaction was stopped to obtain an isocyanate-terminated prepolymer. The temperature was lowered to around 50°C, then 728g of acetone was added with stirring, and the mixture was mixed for 5 minutes to allow dissolution. Then, a mixed solution of 2.4g of IPDA (component f)), 10g of VESTAMIN^{®}A95 (component d)), and 60g of deionized water was added, and the reaction was carried out at 45°C for 10 minutes. Subsequently, a mixed solution of 6.2g of silane coupling agent I (component a)) and 20g of acetone was added, and the reaction was continued for another 10 minutes. The resulting mixture was poured into a dispersion cup, 478g of water was added under high-speed shear conditions at 1500rpm, and then the acetone was removed by distillation under reduced pressure to obtain an aqueous dispersion of polyurethane-urea. This dispersion had a solid content of 49wt%, an average particle size of 201nm as determined by laser correlation method in the dispersed phase, a pH value of 7.5, and an acid value of 0.01mgKOH/g.

### Test method description:

### (I) Test for initial tack and damp-heat resistance:

### (1) Preparation of adhesive test sample:

100 g of each of dispersion samples obtained in the examples and Comparative Examples 1-5 was taken, and 0.05 g of defoaming agent (BYK024), 0.2 g of wetting agent (Tego 245), and 0.15 g of thickener (Vesmody U604) were added and mixed uniformly to obtain an adhesive test sample for ready use.

### (2) Preparation of test sample strip:

Pre-treatment of black rubber strip: The 60 mm × 20 mm black rubber was sanded with a sander, wiped clean with butanone, and then wiped four times with a 2wt% solution of trichloroisocyanurate in acetone (oil-based bismuth powder). Subsequently, it was placed in a 70°C oven for 2 minutes, then taken out, and cooled for ready use;
Pre-treatment of white rubber strip: The 60 mm × 20 mm white rubber was sanded with a sander, wiped clean with butanone, and then wiped four times with a 2wt% solution of trichloroisocyanurate in acetone (oil-based bismuth powder). Subsequently, it was placed in a 70°C oven for 2 minutes, then taken out, and cooled for ready use;
Pre-treatment of white canvas: A white canvas was cut into 70mm×20mm strips. The adhesive test sample was uniformly applied onto the canvas, placed in a 65°C oven for 6 minutes, taken out and cooled for ready use.

### (3) Performance testing:

Initial tack: Using a bursh, the adhesive test sample prepared from the dispersion of each example and comparative example was gently brushed onto two pre-treated black rubber strips, respectively, brushing back and forth three times. Then, the two black rubber strips were simultaneously placed in a 65°C oven, dried for 3 minutes and then taken out. The two black rubber strips were each bent into an arc shape, then gently brought into contact with each other perpendicularly, bonded and then pulled apart. Based on the force required to pull them apart after bonding, the adhesion was scored. (The adhesion was scored from low to high into five levels: A, A+, A++, A+++, and A++++).

Damp-heat resistance: The adhesive test sample prepared from the dispersion of each example and comparative example was uniformly applied onto the pre-treated white rubber strip and white canvas, respectively, activated in a 65°C oven for 3 minutes, then taken out and bonded together, and pressed together using a press machine (20 kgf × 3 s). The bonded specimen was placed in a constant temperature and humidity chamber for 24 hours. After 24 hours, the specimen was suspended in a constant temperature and humidity chamber set at a temperature of 70°C and a humidity of 95%, with a 1 kg weight attached to the white canvas side of the bonded specimen. The time required for complete detachment of the white canvas from the white rubber strip was recorded.

### (II) Damp-heat resistance test at 70°C for 4 days:

The test was carried out according to the test method for damp-heat resistance described in "(I) Test for initial tack and damp-heat resistance", with the only difference being that the adhesive test sample was prepared as follows: 100 g of each dispersion sample obtained from each example and each comparative example was taken, sealed, placed in a 70°C oven for 4 days, then taken out and allowed to return to room temperature. Then, 0.05 g of defoaming agent (BYK024), 0.2 g of wetting agent (Tego 245), and 0.15 g of thickener (Vesmody U604) were added and mixed uniformly to obtain the adhesive test sample for ready use.

### Performance comparison between examples and comparative examples

| | | Damp-heat resistance (time for complete detachment) | 70°C × 4 days |
|---|---|---|---|
| | Initial tack | | Damp-heat resistance (time for complete detachment) |
| Example 1 | A++++ | Complete detachment occurred after 12 days | Complete detachment occurred after 10 days |
| Example 2 | A+++ | Complete detachment occurred after 11 days | Complete detachment occurred after 9 days |
| Example 3 (vs Example 2) | A+++ | Complete detachment occurred after 10 days | Complete detachment occurred after 7 days |
| Example 4 | A++++ | Complete detachment occurred after 9 days | Complete detachment occurred after 7 days |
| Example 5 | A+++ | Complete detachment occurred after 9 days | Complete detachment occurred after 7 days |
| Example 6 | A+++ | Complete detachment occurred after 8 days | Complete detachment occurred after 5 days |
| Example 7 | A+++ | Complete detachment occurred after 7 days | Complete detachment occurred after 4 days |
| Example 8 | A+++ | Complete detachment occurred after 9 days | Complete detachment occurred after 7 days |
| Comparative Example 1 | A++++ | Complete detachment occurred after 5 days | Complete detachment occurred after 2 days |
| Comparative Example 2 | A+++ | Complete detachment occurred after 1 day | Complete detachment occurred after 4 hours |
| Comparative Example 3 | A++++ | Complete detachment occurred after 2 hours | Complete detachment occurred after 40 minutes |
| Comparative Example 4 | A+++ | Complete detachment occurred after 5 days | Complete detachment occurred after 7 hours |
| Comparative Example 5 | A+ | Complete detachment occurred after 2 hours | Complete detachment occurred after 1 hour |

As can be seen from the table above, compared with Comparative Examples 1-5, the dispersions obtained in the Examples of the present invention, when used as the main component of an adhesive, exhibit excellent damp-heat resistance as well as hydrolysis resistance, while also achieving good initial tack. Thus, they have significant practical application value.

Compared with the Examples, Comparative Example 1 and Comparative Example 2 did not control the acid value of the dispersion within the range of 0.005mgKOH/g to 5mgKOH/g, and therefore could not simultaneously achieve good damp-heat resistance and good hydrolysis resistance. Compared with the Examples, Comparative Example 3 did not use a silane coupling agent, and thus could not simultaneously achieve good damp-heat resistance and good hydrolysis resistance. Compared with the Examples, Comparative Example 4 and Comparative Example 5 did not meet the requirements of the present invention regarding the amount of the silane coupling agent, and therefore could not simultaneously achieve good damp-heat resistance, good hydrolysis resistance, and good initial tack.

It should be readily understood that the above examples are merely illustrative for the purpose of clear explanation and do not imply that the present invention is limited thereto. For those of ordinary skill in the art, other different forms of changes or modifications can be made based on the above description. It is neither necessary nor possible to exhaustively list all embodiments herein. Nevertheless, any obvious changes or modifications derived therefrom still fall within the protection scope of the present invention.

## Claims

1. An aqueous dispersion of polyurethane or polyurethane-urea, **characterized in that** it is obtained by reacting a composition comprising the following components:
a) at least one siloxane compound, wherein the general formula of the siloxane compound is as follows: 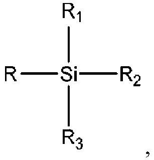 wherein the group R contains at least one NCO-reactive group, and at least two of the groups R₁, R₂, and R₃ are the same or different alkoxy groups, wherein the alkoxy groups are selected from methoxy or ethoxy;
b) at least one polyol with a functionality of 2-4;
c) at least one polyisocyanate;
d) at least one hydrophilic compound, wherein the hydrophilic group of the hydrophilic compound comprises one or more of ionic groups or potential ionic groups, and the hydrophilic compound contains 2 to 3 NCO-reactive groups;
e) at least one nonionic hydrophilic compound that is reactive with NCO and has a monofunctionality;
optional component f): at least one compound containing 1 to 3 amino groups and containing no COOH groups;
optionally, raw materials for preparing the aqueous dispersion further comprise an optional component g): at least one compound containing COOH groups and simultaneously containing 1 to 3 amino groups or hydroxyl groups;
based on the total mass of components a) to g), the amount of each component used is as follows: component a) 0.05-1.25wt%, component b) 75-92wt%, component c) 7-17wt%, component d) 0.5-2.5wt%, component e) 0.02-1.5wt%, component f) 0-2.5wt%, and component g) 0-3wt%; and
the acid value of the aqueous dispersion ranges from 0.005 mgKOH/g to 5 mgKOH/g, preferably from 0.01 mgKOH/g to 3 mgKOH/g, and more preferably from 0.02 mgKOH/g to 3 mgKOH/g.

2. The aqueous dispersion according to claim 1, **characterized in that** during the preparation of the aqueous dispersion, the preparation of an isocyanate-terminated prepolymer is carried out in the presence of trace amounts of alkali metal ions, and based on the total mass of the isocyanate-terminated prepolymer as 100%, the content of the alkali metal ions ranges from 0.1 ppm to 30 ppm, preferably from 0.1 ppm to 23 ppm, and the alkali metal ions are selected from Na⁺ and/or K⁺; and
the isocyanate-terminated prepolymer is obtained by reacting raw materials containing at least component b), component c), and component e).

3. The aqueous dispersion according to any one of claims 1 to 2, **characterized in that**, in component a), the NCO-reactive group in the group R is one or more selected from the group consisting of hydroxyl, primary amino, and secondary amino; preferably, the component a) has at least one primary amino or secondary amino; preferably, the group R is a saturated aliphatic alkyl chain having at least one primary amino and/or secondary amino, optionally bearing an alkoxy group;
preferably, the component a) is one or more selected from the group consisting of bis(3-trimethoxysilylpropyl)amine, bis(3-triethoxysilylpropyl)amine, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-β-(aminoethyl)-γ-aminopropylmethyldiethoxysilane, 3-aminopropyltrimethoxysilane, and 3-aminopropyltriethoxysilane.

4. The aqueous dispersion according to any one of claims 1 to 3, **characterized in that**, in component b), the polyol has a number-average molecular weight of 500-10000, preferably 1000-5000, and more preferably 1000-4000;
preferably, the polyol is one or more selected from the group consisting of diols, triols, and tetraols;
further preferably, the polyol is one or more selected from the group consisting of polyadipic acid-based polyester polyols, polycaprolactone polyols, and polycarbonate polyols;
more preferably, the polyol is selected from the group consisting of polyadipic acid-based polyester diols with a number-average molecular weight of 1000-4000 and a functionality of 2.

5. The aqueous dispersion according to any one of claims 1 to 4, **characterized in that**, in component c), the polyisocyanate is one or more selected from the group consisting of tetramethylene diisocyanate, pentamethylene diisocyanate, hexamethylene diisocyanate, dodecamethylene diisocyanate, 1,4-diisocyanatocyclohexane, isophorone diisocyanate, 4,4'-diisocyanatodicyclohexylmethane, 4,4'-diisocyanato-2,2-dicyclohexylpropane, 1,4-diisocyanatobenzene, 2,4-diisocyanatotoluene, 2,6-diisocyanatotoluene, diphenylmethane-4,4'-diisocyanate, 2,2'-diisocyanatodiphenylmethane, 2,4'-diisocyanatodiphenylmethane, tetramethylxylylene diisocyanate, p-xylylene diisocyanate, p-isopropylidene diisocyanate, p-phenylene diisocyanate, and cyclohexanedimethylene diisocyanate; preferably hexamethylene diisocyanate and/or isophorone diisocyanate.

6. The aqueous dispersion according to any one of claims 1 to 5, **characterized in that**, in component d), the hydrophilic compound is one or more selected from the group consisting of N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, and their alkali metal salts, alkaline earth metal salts, and ammonium salts; preferably N-(2-aminoethyl)-2-aminoethanesulfonate salt.

7. The aqueous dispersion according to any one of claims 1 to 6, **characterized in that**, in component e), the nonionic hydrophilic compound has a number-average molecular weight of 200-8000, preferably 500-3000;
preferably, the number of ethylene oxide in the nonionic hydrophilic compound ranges from 4 to 200, more preferably from 12 to 75;
preferably, the nonionic hydrophilic compound is a monofunctional polyethoxy ether with a number-average molecular weight of 200-8000 and an ethylene oxide number of 4 to 200, more preferably polyethylene glycol monomethyl ether with a number-average molecular weight of 500-3000 and an ethylene oxide number of 12 to 75.

8. The aqueous dispersion according to any one of claims 1 to 7, **characterized in that**, in component f), the compound containing 1 to 3 amino groups and containing no COOH groups is one or more of aliphatic amine compounds and cycloaliphatic amine compounds, preferably, the amino groups contained therein are primary amino groups and/or secondary amino groups, and the compound containing 1 to 3 amino groups and containing no COOH groups optionally contains hydroxyl groups;
preferably, the component f) is selected from one or both of isophorone diamine and N-(2-hydroxyethyl)ethylenediamine.

9. The aqueous dispersion according to any one of claims 1 to 8, **characterized in that** the raw materials for preparing the aqueous dispersion comprise the component g), wherein the component g) is preferably one or more selected from the group consisting of monohydroxy carboxylic acids, dihydroxy carboxylic acids, dihydroxy dicarboxylic acids, trihydroxy carboxylic acids, monoamino carboxylic acids, diamino carboxylic acids, and triamino carboxylic acids;
preferably, the component g) is one or more selected from the group consisting of dimethylolpropionic acid, dimethylolbutanoic acid, dimethylolacetic acid, dihydroxysuccinic acid, hydroxypivalic acid, hydroxyacetic acid, hydroxypropionic acid, lysine, lactic acid, 6-aminocaproic acid, alanine, N-(2-aminoethyl)-β-alanine, aminoundecanoic acid, 8-aminooctanoic acid, 5-aminopentanoic acid, 4-aminobutyric acid, aminobenzoic acid, 4-aminomethylcyclohexanecarboxylic acid, 2-aminohexanoic acid, 4-aminocyclohexanecarboxylic acid, 12-aminododecanoic acid, and 9-aminononanoic acid, more preferably one or more of dimethylolpropionic acid, lactic acid, and lysine.

10. A method for preparing the aqueous dispersion of polyurethane or polyurethane-urea according to any one of claims 1 to 9, **characterized in that** the method comprises the following steps:
S1: reacting the component b), component c), and component e) to form an isocyanate-terminated prepolymer;
S2: after dissolution, further reacting the prepolymer with the component d), component a), and optionally component f), and then dispersing with water;
in step S1 and/or step S2, a solvent is optionally used that can be partially or completely removed either during dispersion or through a distillation operation following dispersion;
the optional component g) is added at any stage of step S1 and/or step S2;
meanwhile, during the preparation of the aqueous dispersion, the acid value of the prepared aqueous dispersion is controlled to be between 0.005mgKOH/g and 5mgKOH/g, preferably between 0.01mgKOH/g and 3mgKOH/g, and more preferably between 0.02mgKOH/g and 3mgKOH/g.

11. The method according to claim 10, **characterized in that** in step S1, the preparation of the isocyanate-terminated prepolymer is carried out in the presence of trace amounts of alkali metal ions, and based on the total mass of the isocyanate-terminated prepolymer as 100%, the content of the alkali metal ions is 0.1 ppm to 30 ppm, and the alkali metal ions are selected from Na⁺ and/or K⁺.

12. Use of the aqueous dispersion according to any one of claims 1 to 9, or the aqueous dispersion prepared by the method according to any one of claims 10 to 11, in the preparation of adhesives and sealants.
